# DEMANDE DE BREVET EUROPEEN

(11) **EP 1 133 041 A1**
(43) Date de publication de la demande: **12.09.2001**
(21) Numéro de dépôt: 01400632.4
(22) Date de dépôt: 09.03.2001
(51) Int. Cl.: H02G 3/32

(54) **Dispositif de guidage pour conducteur en feuille**

(30) Priorité: 09.03.2000 FR 0003046
(71) Demandeur: Rapid S.A., 95650 Puiseux Pontoise (FR)
(72) Inventeur: Leon, Jean-Pierre René, 78800 Houilles (FR); Schreck, Thomas, 98631 Halna (DE)
(74) Mandataire: Berger, Helmut

(57) **Abrégé**

L'invention concerne un dispositif de guidage pour conducteur en feuille, notamment câble en feuille.

Ce dispositif est caractérisé en ce qu'il comporte un élément avantageusement bidimensionnel (1), pliable autour d'une zone de ligne de pliage (3), et une goupille de renvoi de conducteur en feuille (8), autour de laquelle le conducteur (2) à l'état incliné par rapport à l'axe de la goupille peut être disposé pour obtenir le renvoi et autour de laquelle l'élément (1) peut être plié lorsque la goupille avec le conducteur renvoyé par elle est disposé dans la zone de la ligne de pliage (3).

L'invention est utilisable dans le domaine du cablage électrique.

## Description

L'invention concerne un dispositif de guidage pour conducteur en feuille, notamment pour câble en feuille.

Jusqu'à présent aucun dispositif de guidage n'a été proposé, qui permet un changement de direction des conducteurs en feuille, d'une façon simple et sûre, sans sectionnement des conducteurs et sans obligation de reconnecter les tronçons à l'emplacement du sectionnement, après un positionnement approprié des deux tronçons en feuille.

La présente invention a pour but de proposer un dispositif de guidage pour conducteur en feuille, qui permet de réaliser, d'une façon simple, un tel changement de direction d'un conducteur en feuille.

Pour atteindre ce but, un dispositif de guidage de conducteur en feuille, selon l'invention, est caractérisé en ce qu'il comporte un élément avantageusement bidimensionnel et susceptible d'être plié autour d'une zone de ligne de pliage et une goupille de renvoi de conducteur en feuille autour de laquelle le conducteur est susceptible d'être disposé dans une position inclinée par rapport à l'axe de la goupille pour réaliser un renvoi ou changement de direction, lorsque la goupille avec le conducteur renvoyé par celle-ci est disposé dans la zone de ligne de pliage.

Selon une caractéristique de l'invention, la partie se trouvant sur un côté de la zone de ligne de pliage de l'élément pliable est configurée en partie de guidage de conducteur en feuille, pourvu de moyens de fixation du conducteur, et la partie se trouvant de l'autre côté de la zone de la ligne de pliage est réalisée sous forme d'une partie de recouvrement susceptible d'être repliée sur la partie de guidage.

Selon une autre caractéristique de l'invention, la partie de guidage de l'élément pliable comporte des moyens pour la fixation du conducteur en feuille sur lui, dans sa position renvoyée.

Selon une autre caractéristique de l'invention, les moyens de fixation sont formés par des pointes de positionnement dans la partie de guidage de l'élément pliable et le conducteur en feuille comporte des trous de positionnement qui sont susceptibles de s'engager autour des pointes de positionnement.

Selon une autre caractéristique de l'invention, la partie de guidage porte sur sa surface libre des moyens, tels que des agrafes de fixation, pour le montage sur une structure de support.

Selon une autre caractéristique de l'invention, la partie de guidage et la partie de recouvrement de l'élément pliable comportent des moyens par lesquels elles sont avantageusement amoviblement verrouillables dans leur position repliée l'une sur l'autre.

Selon encore une autre caractéristique de l'invention, la partie de guidage et la partie de recouvrement sont formées par deux pièces séparées, la goupille de renvoi étant associée à une partie.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 est une vue de dessus d'un élément de guidage d'un conducteur en feuille, selon l'invention ;
- la figure 2 est une vue en coupe le long de la ligne II-II de la figure 1 ;
- la figure 3 est une vue à plus grande échelle de la zone III entourée sur la figure 1 par un cercle ;
- la figure 4 est une vue en perspective d'un élément pliable selon l'invention et montre notamment la face supérieure de celui-ci ; et
- la figure 5 est une vue de dessus d'un mode de réalisation en deux parties d'un élément pliable selon l'invention.

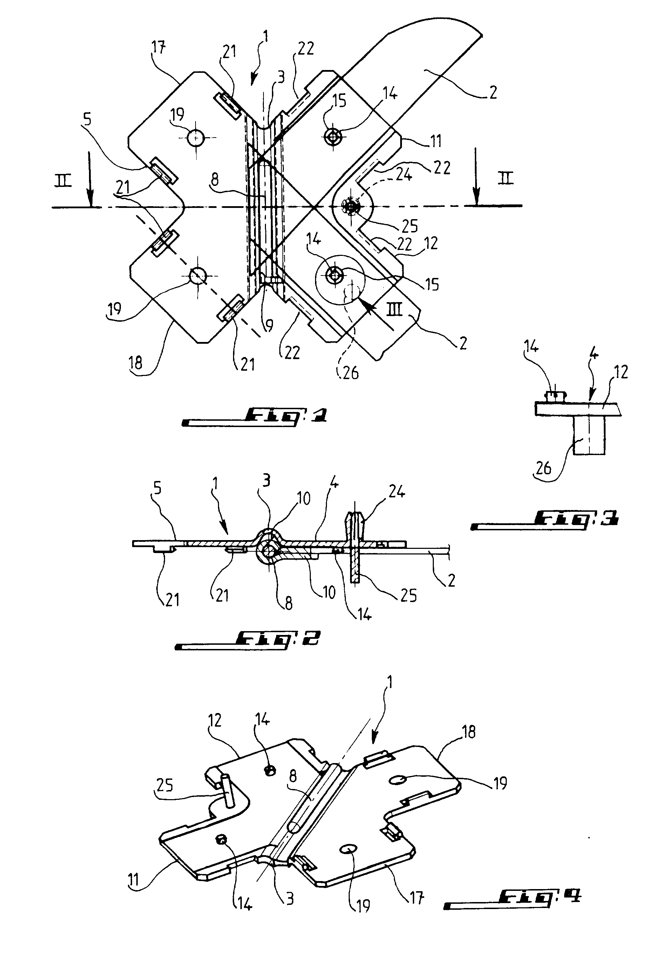

La figure 1 montre un dispositif de guidage de conducteurs en feuille selon l'invention. Ce dispositif comporte un élément pliable bidimensionnel 1, qui est configuré pour former un dispositif de renvoi ou de changement de direction d'un conducteur en feuille 2, dans l'exemple représenté d'un conducteur en feuille en forme d'un ruban. Le conducteur en feuille 2 est renvoyé par le dispositif d'un angle de 90° et présente, à cette fin, une forme en croix à branche à angle droit. L'élément pliable est pliable autour d'une zone de ligne de pliage 3 qui forme avec les axes des branches un angle de 45° et passe à travers le point de milieu de l'élément pliable.

La zone de ligne de pliage 3 divise l'élément pliable en deux parties, une partie 4 pour le guidage du conducteur en feuille 2 et une partie de recouvrement 5 qui est pliable sur la partie de guidage 4. La zone de ligne de pliage 3 est courbe dans sa section transversale et fait saillie vers le bas du plan de l'élément. Au-dessus de cette zone concave, au milieu de la zone 3, s'étend une goupille de renvoi ou de changement de direction 8 de la feuille. Cette goupille s'étend parallèlement à la zone 3 et au plan de l'élément 1. Elle est fixée à une extrémité 9 à l'élément 1 par l'intermédiaire d'une barrette 10. L'autre extrémité de la goupille est libre. Etant donné que la goupille 8 s'étend concentriquement au rayon de courbure de la zone de ligne de pliage 3, l'élément 1 est susceptible d'être plié autour de la goupille 8.

Comme le montre la figure 1, le ruban de conducteur en feuille est disposé, pour son changement de direction ou son renvoi d'un angle de 90°, autour de la goupille 8, qui forme avec l'axe du ruban de conducteur un angle de 45°. Les deux branches 11, 12 de la partie de guidage 4 sont quelque peu plus larges que le conducteur en feuille 2 et constituent par conséquent de bonnes faces d'appui pour les deux portions de conducteur renvoyées de 90°. Chaque face d'appui d'une des branches 11, 12 porte une pointe de positionnement 14 qui passe à travers un trou de positionnement 15 prévu dans le conducteur. Le conducteur 2 est par conséquent susceptible d'être positionné et fixé sur la partie de guidage 4.

La partie de recouvrement 5 comporte dans chaque branche 17, 18 un trou de positionnement 19 dans lequel s'engage, après le pliage de la partie de recouvrement 5 sur la partie de guidage 4, la pointe de positionnement 14 disposée symétriquement par rapport à la zone de la ligne de pliage 3, de la branche de partie de guidage correspondant. On obtient ainsi un verrouillage exact de la partie de recouvrement sur la partie de guidage.

Les deux parties 4, 5 sont verrouillées amoviblement dans leur position pliée. A cette fin, on a prévu aux bords latéraux de chaque branche 17, 18 de la partie de recouvrement des éléments de verrouillage 21 qui s'engagent dans des évidements de verrouillage 22 sur les branches associées 11 et 12 de la partie de guidage.

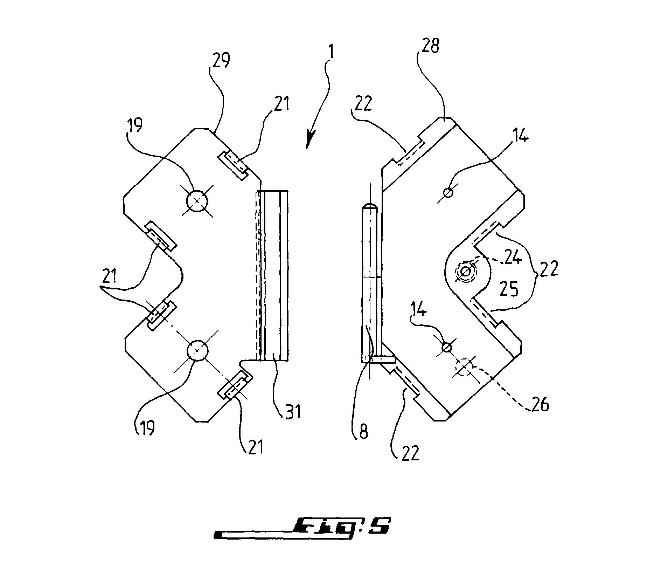

L'élément pliable 1 selon l'invention peut être fixé sur une structure de support, telle qu'une carrosserie. A cette fin, on a prévu dans le plan de symétrie, perpendiculaire à la zone de la ligne de pliage 3, entre les deux branches 11 et 12 sur la face inférieure, une cheville 24, réalisée en une pièce avec l'élément 1 et susceptible d'être écartée par un petit axe d'écartement 25, d'une façon connue en soi. Un ergot cylindrique 26 est prévu sur la face inférieure par exemple de la branche 12, à titre de moyen anti-rotation de l'élément pliable, conformément à la figure 3.

Le fonctionnement d'un dispositif de guidage de conducteur en feuille selon l'invention ressort déjà de la description précédente de la structure du dispositif. Après la mise en place déjà décrite du conducteur en feuille 2 autour de la goupille de renvoi 8, à l'état déployé de l'élément 1, il suffit de plier la partie de recouvrement 5 autour de la goupille 8 sur la partie de guidage 4 et de verrouiller les deux parties dans cette position.

La figure 5 montre un autre mode de réalisation du dispositif de pliage selon l'invention. Selon la figure 5, l'élément 1 se compose de deux parties, à savoir une partie 28 qui constitue la partie de guidage de l'élément 1 et correspond, du point de vue de sa fonction, à la partie de guidage 4 du premier mode de réalisation, et une seconde partie 29 qui est comparable à la partie de recouvrement 5. La goupille de renvoi 8 est fixée à la partie de guidage 28.

La partie de recouvrement 29 comporte, sur son côté tourné vers la goupille, un élément semi-cylindrique, tubulaire 31 dont le rayon est quelque peu supérieur à celui de la goupille 3.

Après la mise en place du conducteur en feuille 2 autour de la goupille 30, la partie de recouvrement 29 est placée sur la partie de guidage 28, l'élément 31 étant alors coaxial à la goupille 8. Les deux parties sont verrouillées dans cette position, à l'aide des éléments de verrouillage décrits plus haut. Comme le montre la figure 5, la structure de l'élément 1 correspond par ailleurs à celle déjà décrite lors de la description des figures 1 à 4.

Dans le mode de réalisation de l'invention, qui est représenté, le conducteur est renvoyé d'un angle de 90°. D'autres angles de renvoi sont cependant réalisables. Il suffit à cette fin de réaliser l'élément pliable 1 de sorte que les deux branches de chaque partie 4, 5 présentent un angle qui correspond à l'angle de renvoi.

## Revendications

1. Dispositif de guidage pour conducteur en feuille, notamment câble en feuille, **caractérisé en ce qu**'il comporte un élément avantageusement bidimensionnel (1), pliable autour d'une zone de ligne de pliage (3), et une goupille de renvoi de conducteur en feuille (8), autour de laquelle le conducteur (2) à l'état incliné par rapport à l'axe de la goupille peut être disposé pour obtenir le renvoi et autour de laquelle l'élément (1) peut être plié lorsque la goupille avec le conducteur renvoyé par elle est disposé dans la zone de la ligne de pliage (3).

2. Dispositif selon la revendication 1, **caractérisé en ce que** la partie (4) de l'élément pliable (1), se trouvant sur un côté de la zone de la ligne de pliage (3), est configurée en partie de guidage de conducteur en feuille pourvu de moyens (14) pour la fixation du conducteur en feuille, et que la partie (5) se trouvant sur l'autre côté de la zone de la ligne de pliage (3) est configurée en partie de recouvrement susceptible d'être repliée sur la partie de guidage (4).

3. Dispositif selon la revendication 2, **caractérisé en ce que** la partie de guidage (4) de l'élément pliable (1) comporte des moyens (14) pour la fixation du conducteur en feuille (2) sur elle dans sa position renvoyée.

4. Dispositif selon la revendication 3, **caractérisé en ce que** les moyens pour la fixation sont formés par des pointes de positionnement (14) dans la partie de guidage (4) de l'élément pliable et en ce que le conducteur en feuille (2) comporte des trous de positionnement (14) dans lesquels les pointes de positionnement (14) peuvent s'engager.

5. Dispositif selon l'une des revendications 2 à 4, **caractérisé en ce que** la partie de guidage (4) comporte sur sa face libre des moyens (24) pour la fixation sur une structure de support.

6. Dispositif selon la revendication 5, **caractérisé en ce que** moyens (24) de fixation sur une structure de support sont formés par des chevilles écartables.

7. Dispositif selon l'une des revendications 2 à 6, **caractérisé en ce que** la partie de guidage (4) et la partie de recouvrement (5) de l'élément pliable (1) comporte des moyens permettant le verrouillage des deux parties dans leur position repliée.

8. Dispositif selon la revendication 7, **caractérisé en ce que** les parties (4, 5) sont amoviblement verrouillables.

9. Dispositif selon l'une des revendications 1 à 4, **caractérisé en ce que** la partie de guidage (4) et la partie de recouvrement (5) sont formées par deux parties séparées, la goupille de renvoi (8) étant associée à la partie de guidage (4) et les deux parties sont verrouillables dans leur position pliée l'une sur l'autre.
